# FASCICULE DE BREVET EUROPEEN

(11) **EP 1 348 649 B1**
(45) Date de publication et mention de la délivrance du brevet: **29.06.2005**
(21) Numéro de dépôt: 03100571.3
(22) Date de dépôt: 07.03.2003
(51) Int. Cl.: B65G 11/06, B65G 11/20, B65G 11/18, B65G 69/16

(54) **Toboggan répartiteur pour enceinte de transfert et de stockage de produits fragiles**
Verteilerrutsche für einen Behälter zur Übergabe und Speichern von zerbrechlichen Gegenständen
Distributor chute for a receptacle for transferring and for storage of fragile products

(30) Priorité: 27.03.2002 EP 21003090
(43) Date de publication de la demande: 01.10.2003
(73) Titulaire: ELVECO msj S.A., B-1200 Bruxelles (BE)
(72) Inventeur: Lhoest, M. Willy, B-1200 Bruxelles (BE)
(74) Mandataire: Van Straaten, Joop

(56) Documents cités:
- GB-A- 769 312
- US-A- 4 176 997

## Description

L'invention concerne les toboggans répartiteurs pour enceintes de transfert et les dispositifs de stockage pour produits pharmaceutiques ou chimiques fragiles variés en vrac, essentiellement pour les industries chimiques, pharmaceutiques et alimentaires.

On entend par produits et articles en vrac essentiellement des produits de structure granulaire, compactée, agglomérée ou pulvérulente fragile et notamment des articles tels que les comprimés de forme quelconque, les gélules, capsules, spansules, pellets, mais aussi des produits en cristaux (comme le sorbitol, cristallisé en aiguilles), etc.

Ces toboggans sont utilisés ici en conjonction avec des dispositifs de transfert ou de stockage. Leur utilité est d'absorber l'énergie cinétique des articles ou produits déversés en vrac dans des enceintes ou containers, de façon à réduire les bris et le tassement, particulièrement préjudiciables lorsqu'il s'agit notamment de comprimés de formes complexes et/ou fragiles (rhomboïdales, etc.) et/ou anguleuses.

On connaît par GB-468 721, US 1 802 089 ou US 4 176 997 des dispositifs en forme d'hélicoïde d'aspect similaire, destinés essentiellement au transfert de charbon. Même s'il n'est pas souhaitable de briser les blocs de charbon, ces derniers n'ont évidemment pas une fragilité comparable à celle de produits médicamenteux. En outre, les vitesses de déchargement du charbon et celles pour le stockage de médicaments fragiles n'ont évidemment rien de commun.

Dans l'industrie chimique également, nombre de fabricants ont opté pour des toboggans de forme hélicoïdale. Ces toboggans hélicoïdaux se développent généralement autour d'une colonne centrale (voir US 5,598,914; US 4,726,546). D'autres, tels que US 5,083,651 ou GB 2 213 806 ont développé des toboggans hélicoïdaux à axe évidé. Ces toboggans présentent, en coupe, une section en L ou en U. La hampe du L, formant une piste, est disposée radialement par rapport à l'axe de la spirale, la branche du L, formant une bordure latérale, étant disposée en substance parallèlement à l'axe de l' hélicoïde.

L'efficacité des toboggans hélicoïdaux connus est limitée par des caractéristiques intrinsèques, liées à la forme et aux dimensions des produits manutentionnés. Ainsi, des granulés sphériques auront un comportement à l'écoulement bien différents de celui de pastilles ou de capsules rhomboïdales. L'état de surface des articles a également son importance. En conséquence, chaque toboggan doit être normalement adapté à un type de produit. Si ce n'est pas le cas, il se produit des interruptions et des empilements qui limitent l'utilité de ce genre de dispositif ou, à la limite, rendent son usage néfaste, d'une part parce qu'il entrave un empilement régulier, d'autre part parce qu'il entraîne un pourcentage important de bris. Les toboggans de l'état de la technique comprennent différents artifices (interruption de la piste, etc.) censés limiter l'effet de ces phénomènes. De plus ces toboggans étant très étroits, ils ne peuvent jouer le rôle de baffles ou de supports pour mieux distribuer la charge.

Un autre inconvénient majeur des dispositifs connus est qu'ils ne sont adaptés qu'à une forme de produits spécifique, et qu'il est donc nécessaire d'en changer à chaque nouvelle production, sous peine d'un pourcentage de déchets important.

Le but de l'invention est la mise au point d'un toboggan de transfert hélicoïdal qui soit adapté à la manipulation en vue du stockage et du transport dans des enceintes d'une grande variété de produits ou d'articles et permette un écoulement et un empilement régulier et limitant la casse d'articles fragiles.

L'objet de l'invention est un toboggan répartiteur hélicoïdal pour enceinte de transfert de produits pharmaceutiques ou chimiques fragiles variés en vrac comprenant au moins une piste hélicoïdale se développant autour d'un axe vertical dans lequel le volume central du toboggan est évidé en forme de puits ; chaque piste est continue et présente un pas en substance constant; chaque piste forme un plateau large dont la section transversale est en substance droite, inclinée transversalement en direction de l'axe ; l'angle d'inclinaison de la piste est tel que les particules de matériau transféré, animées à la partie supérieure de chaque hélicoïde d'une vitesse suffisante pour que la force centrifuge maintienne le produit le long de la piste correspondante, dévient vers l'axe lorsque la force centrifuge qui les maintient sur la piste s'annule ou descend au-dessous d'une valeur critique.
L'avantage de cette disposition est que, même si la dispersion des caractéristiques des produits est importante, il ne se produit pas d'empilement d'articles le long de l'hélicoïde : tout article subissant un arrêt inopiné (du fait du frottement, d'une forme irrégulière, etc.), s'évacue de lui-même vers le "puits" central. Opérer avec une piste large permet un débit important en même temps qu'un support substantiel contre la compaction et l'écrasement. En outre cette largeur de piste importante permet l'utilisation d'une grande variété de produits caractérisés par des propriétés de glissement très étalées.

Suivant un mode de réalisation préféré, au moins un dispositif de chargement, permettant d'injecter le produit, en fonction de sa dynamique, en un endroit plus ou moins éloigné de l'axe Z, injecte le produit transporté quasi-tangentiellement à chaque piste à la partie supérieure de chaque hélicoïde avec une vitesse suffisante pour que la force centrifuge maintienne le produit le long de la piste correspondante.

De façon avantageuse, l'angle d'inclinaison α de chaque hélicoïde est supérieur ou égal à l'angle de repos du produit transporté, ce qui assure un remplissage uniforme du volume de stockage par débordement au dessus du bord extérieur de la spirale.

Suivant un mode de réalisation préféré, l'inclinaison α du revers de chaque piste en hélicoïde est légèrement inférieure ou égale à l'angle de repos du produit transporté. Ceci permet d'alléger la pression exercée sur les produits situés à la base de chaque empilement en laissant un espace vide de produit, immédiatement sous le plan de la spirale.

Suivant un mode de réalisation avantageux, le toboggan de l'invention est muni d'un mécanisme permettant de faire varier l'inclinaison transversale α de chaque piste.

Ce dispositif comprend de préférence des tringles reliées à chaque piste par des liaisons articulées.

Ce mécanisme peut notamment comprendre des tringles dont la longueur est ajustable.
Chacune des pistes hélicoïdale peut, avantageusement, être munie d'un rebord extérieur. De façon préférée, la hauteur de ce rebord décroît du haut vers le bas. Il peut être percé d'échancrures débouchant sur l'espace extérieur à la spirale. Dans ce cas, le rebord extérieur est muni d'un déflecteur en amont de chaque échancrure.

Un autre objet de l'invention est une enceinte de stockage, de transport et de déchargement à vidange par le bas muni d'un toboggan tel que décrit ci-dessus. L'avantage d'une telle enceinte est que le taux de bris et d'écrasement des produits est considérablement réduit, tant au transfert qu'au transport et au stockage, du fait, notamment que le toboggan joue le rôle de baffle de soutènement.

D'autres particularités et avantages de l'invention ressortiront de la description ci-après de modes de réalisation particuliers de l'invention, référence étant faite aux dessins annexés dans lesquels :
La fig. 1 est une vue schématique en élévation d'un toboggan selon l'invention.
La fig. 2 est une vue schématique du mode de progression de produits variés le long du toboggan de l'invention.
La fig. 3 est une vue en plan d'une enceinte de stockage munie d'un toboggan selon l'invention.
La fig. 4 est une vue en élévation avec arrachement de l'enceinte de stockage de la fig. 3.
La fig. 5 est une vue schématique en élévation d'un toboggan de l'invention après variation de l'angle de la piste hélicoïdale.
La fig. 6 est une vue en plan d'une autre forme d'une enceinte de stockage munie d'un toboggan à trois pistes selon l'invention.
Les Fig. 7, 8 et 9 sont des vues développées du système de tringlerie d'un toboggan suivant l'invention à des angles d'inclinaison différents.
La fig. 10 est une vue en élévation avec arrachement de l'enceinte de stockage de la fig.4 montrant l'empilement des articles.
La Fig. 11 est une vue de détail des liaisons des tringles montrées à la Fig.4.
Les Fig. 12 et 13 sont des vues schématiques, respectivement en élévation et en plan, d'une autre forme d'alimentation de l'enceinte de stockage.
La Fig. 14 est une vue schématique en élévation d'un autre mode de réalisation du toboggan de l'invention.
La Fig. 15 est une vue en élévation d'un autre mode de réalisation d'un toboggan, avec interruptions dans le bord latéral.

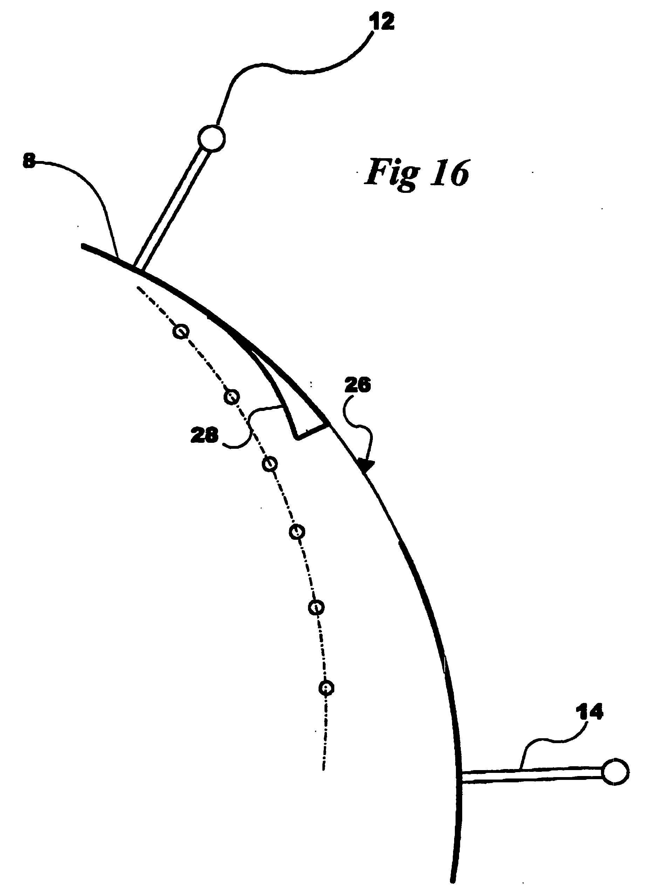

La Fig. 16 est une vue détaillée, en plan, d'un mode de réalisation d'un toboggan suivant la Fig. 15.

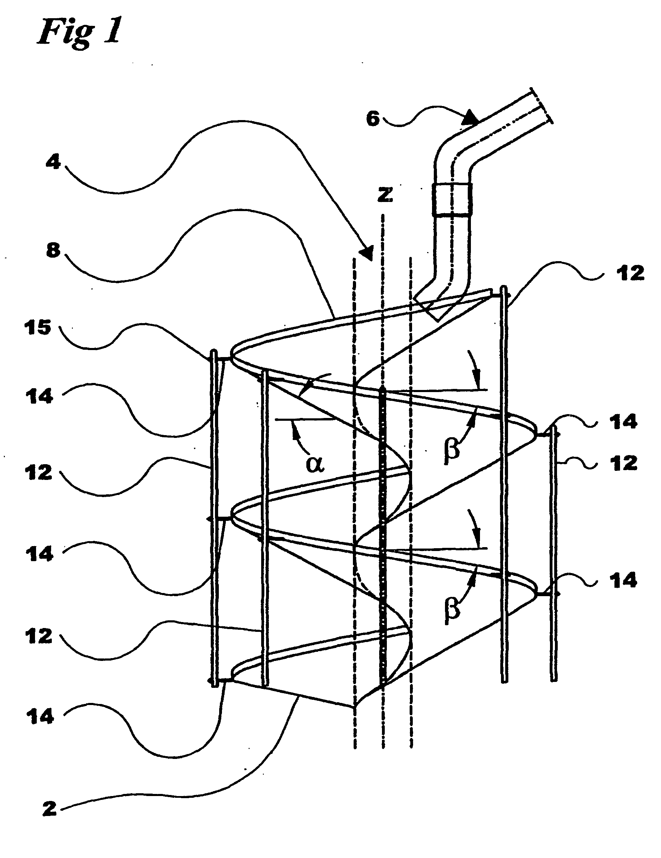

Le toboggan représenté à la Fig. 1 comprend une large piste hélicoïdale 2 se développant autour d'un axe vertical Z. Cette piste 2 ne va pas jusqu'à l'axe Z : le centre de l' hélicoïde est évidé en forme de puits 4.

Un dispositif de chargement 6 situé au-dessus de la piste 2 déverse les produits ou les articles fragiles à stocker 5 quasi-tangentiellement à la piste 2, avec une vitesse initiale déterminée.

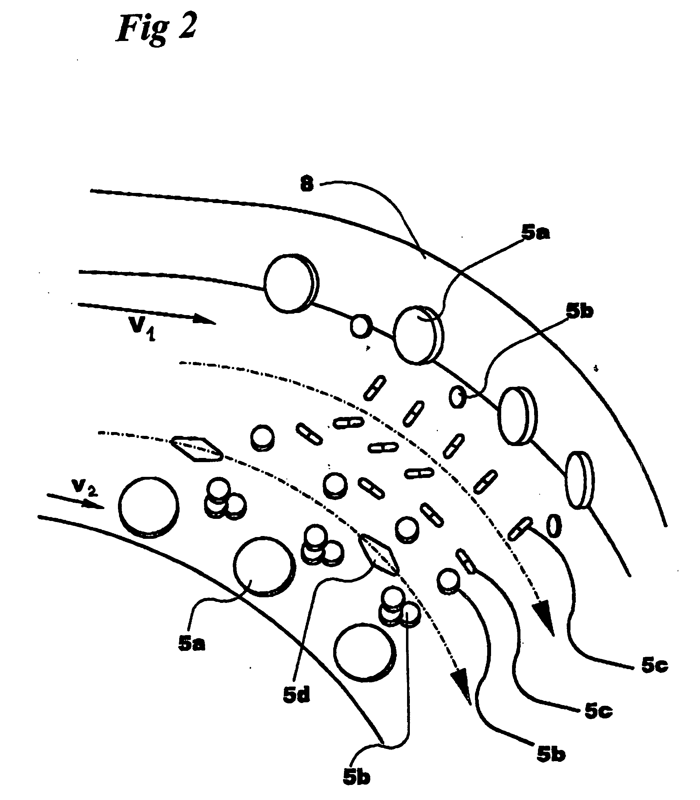

Le trajet d'un article ou d'une particule de produit 5 dégringolant le long de la piste 2 est déterminé par trois forces : la gravité qui tend à l'entraîner partiellement le long de la piste et partiellement vers l'axe Z, la force centrifuge qui tend à l'éloigner de l'axe Z et le frottement. De ces trois forces, c'est le frottement qui est la donnée la plus aléatoire. Il est en effet rare que les articles 5 se présentent sous la forme idéale de sphères parfaites. Ils se présentent plus généralement sous des formes donnant lieu à une grande dispersion de comportements dynamiques. Cette dispersion des comportements est illustrée de façon plus visuelle à la Fig. 2. Ainsi, un comprimé en forme de disque épais 5a peut aussi bien rouler sur sa tranche avec une très grande vélocité V1 (à la périphérie de la piste 2) que glisser très lentement (vélocité V2) sur l'une de ses faces (près de l'axe central du toboggan).

Des comprimés ou tablettes (disques de moindre diamètres) 5b auront également tendance à rouler plus vite sur la tranche (à la périphérie du toboggan), à glisser à plat à vitesse moyenne sur la partie médiane de la piste 2 ou à progresser plus lentement en empilages près du puits central 4.

Cette dispersion de caractéristiques concerne également les autres formes de produits. Ainsi, dans le cas des gélules cylindriques à bouts hémisphériques 5c, si leur axe se présente perpendiculairement à celui de la piste, ils roulent plus rapidement (et ont donc tendance à dévier vers la périphérie) que si leur axe est oblique. Si leur axe est parallèle à celui de la piste (3ème cas représenté) ils se contentent de glisser longitudinalement, avec un frottement important.

Enfin, les comprimés de forme rhomboïdale 5d progressent à vitesse assez faible par une combinaison de glissades et de carambolages.

Le toboggan de l'invention est conçu pour réduire considérablement les problèmes liés à une telle dispersion.

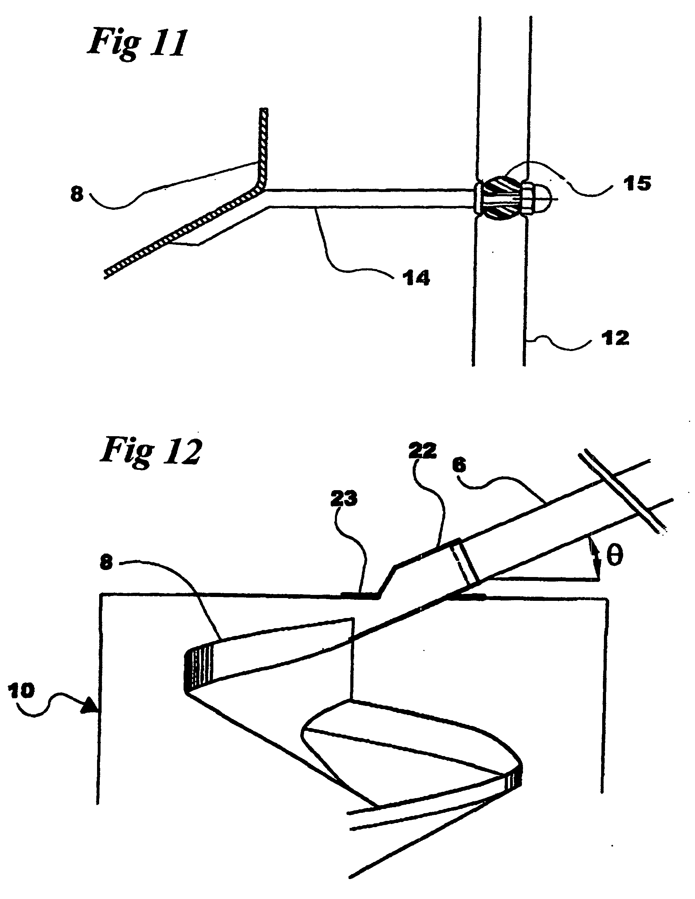

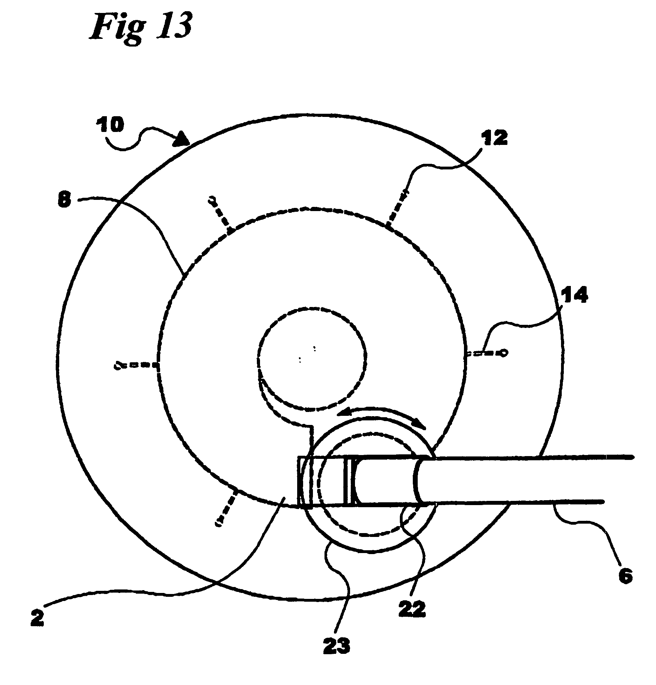

On s'arrange tout d'abord pour que, lorsqu'ils prennent contact avec la piste 2, les articles ou particules soient animés d'une vitesse adéquate pour que la force centrifuge en maintienne une majorité sur la piste 2 du haut en bas du toboggan. Ce résultat est obtenu notamment par la présence et la conception du dispositif de chargement 6. Dans le dispositif 6 représenté à la Fig. 1, c'est le passage dans un conduit vertical de hauteur H prédéterminée qui confère aux articles la vitesse initiale nécessaire. Un autre mode de réalisation, montré aux Fig. 12 et 13, sera décrit plus loin.

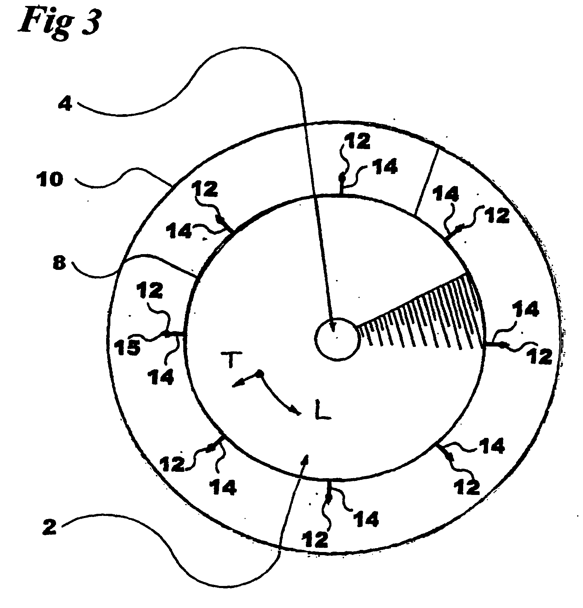

Le trajet d'un article se déplaçant le long de la piste 2 peut être décomposé suivant deux directions perpendiculaires entre elles, comme montré à la fig. 3.

Une première direction L, dite « longitudinale » suit une courbe hélicoïde équidistante en chaque point de l'axe Z.

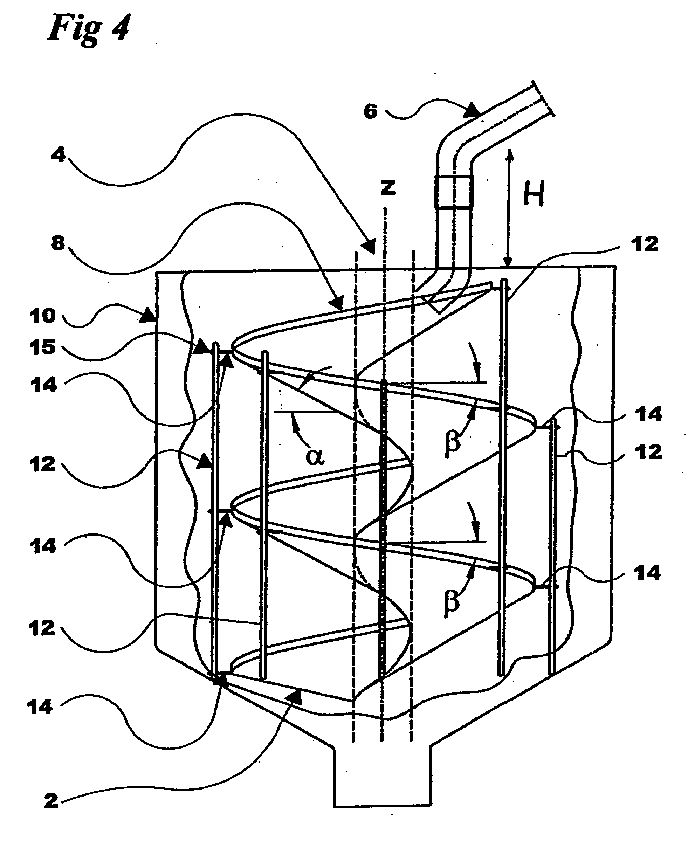

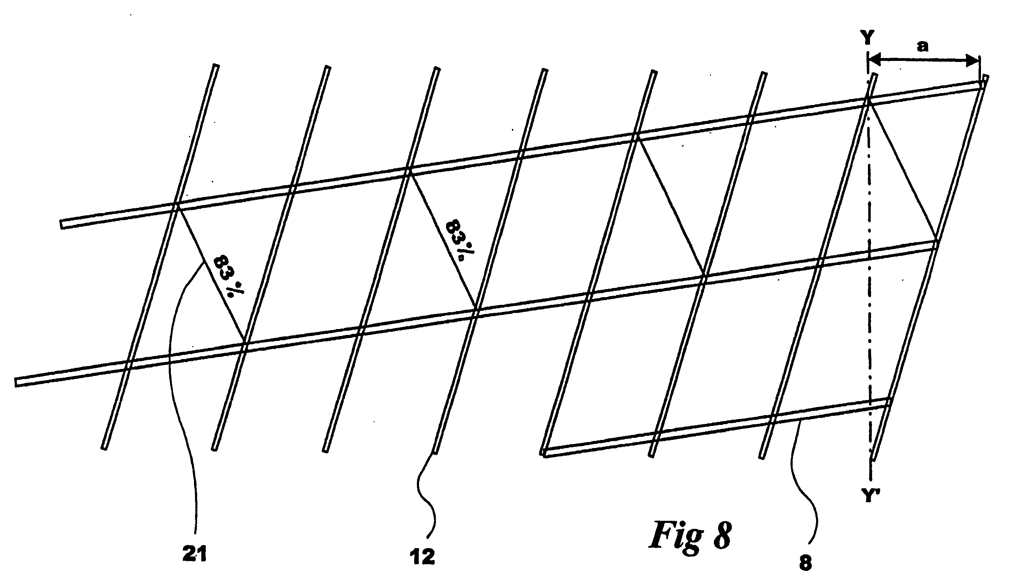

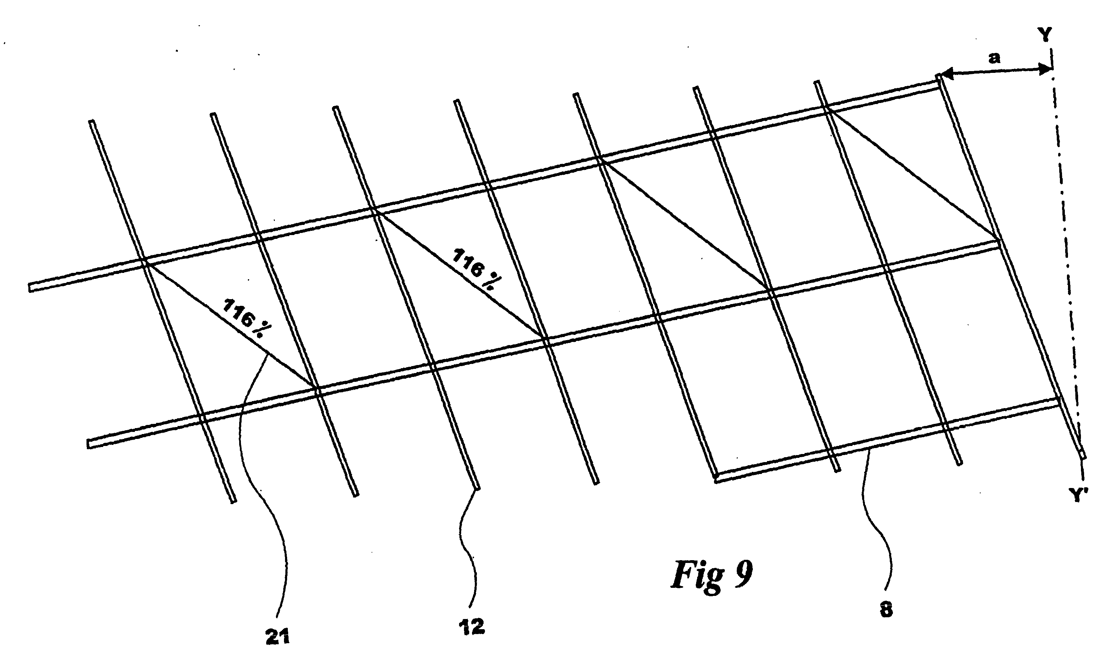

Cette courbe L fait avec un plan horizontal un angle β, montré à la fig. 1. Une deuxième direction T, dite « transversale » est la génératrice d'une portion de cône d'axe central Z, tangente à l'hélicoïde, et fait avec un plan horizontal (voir fig. 1) un angle α.
Les deux angles de pente α et β sont liés au pas P de l' hélicoïde et au diamètre de la piste 2, comme montré aux Fig. 4, 5, 7, 8 et 9.

Les valeurs respectives de α et β sont déterminées à la construction pour que lorsqu'un article 5 ralentit ou, à la limite, s'arrête pour une raison quelconque, il dévie vers l'axe Z et soit évacué dans le puits central 4, évitant de devenir lui-même un obstacle au bon cheminement de l'ensemble du chargement et minimisant la hauteur de chute (donc le pourcentage de bris) des produits fragiles à l'intérieur de l'enceinte.

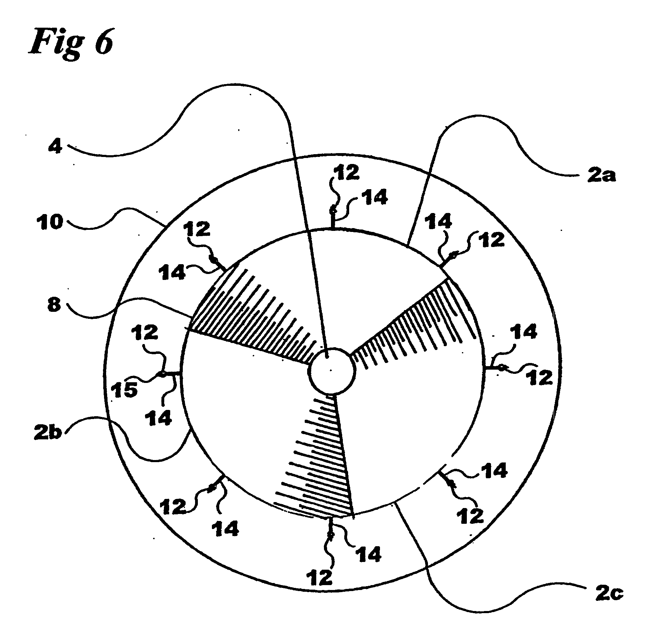

Bien que le dispositif représenté dans les figures ne comprenne qu'une seule piste hélicoïdale 2, il apparaît clairement que l'on peut placer dans le même dispositif deux voire trois pistes décalées angulairement 2a, 2b, 2c sans que celles-ci interfèrent les unes avec les autres (voir Fig. 6).

La piste 2 représentée sur les figures 1 et 2 comprend un rebord extérieur 8 destiné à limiter l'éjection vers l'extérieur d'articles ou de particules par trop véloces.

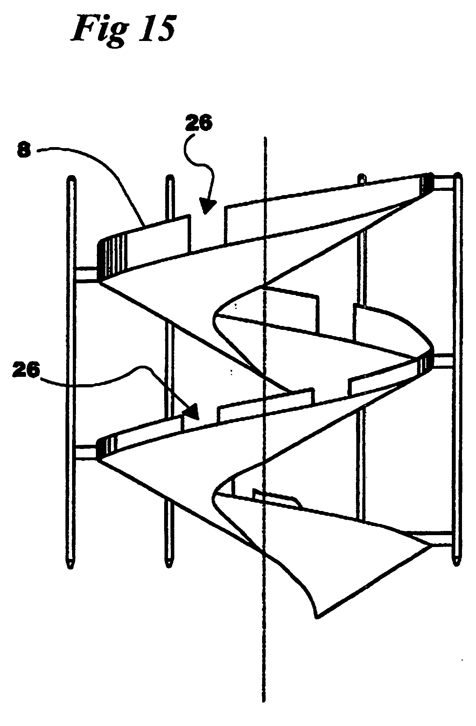

La présence d'un tel rebord 8 n'est cependant pas obligatoire et elle dépend essentiellement du type de produit transporté. Ce rebord 8 peut être muni d'échancrures, de distance en distance, afin de favoriser le débordement (comme cela est montré à la Fig. 15 ) lorsque l'enceinte se remplit.

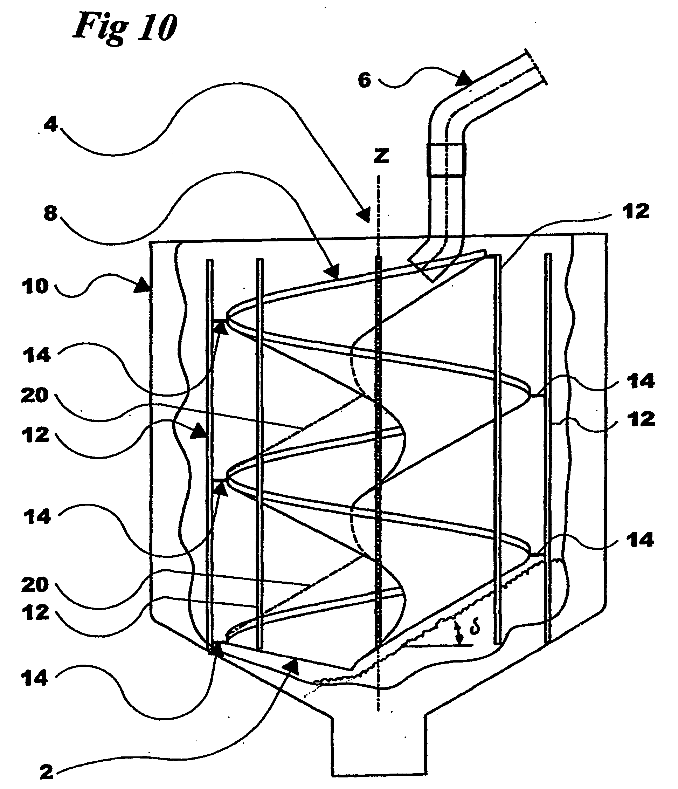

Un des inconvénients connus des toboggans hélicoïdaux est que les revers des hélicoïdes forment des "recoins" que les produits ou articles 5 n'arrivent pas à combler. En effet, (voir Fig.10) tout empilement d'articles adopte spontanément, au repos, une forme conique 20 dont l'angle δ, appelé angle de repos (ou « angle de talus »), est une propriété mécanique caractéristique. Une proportion non négligeable du volume de stockage peut être perdue de cette façon.

Pour éviter cet inconvénient, on attribue par construction à l'angle α une valeur supérieure ou égale à l'angle de repos δ des produits transportés, comme montré à la Fig. 10. De cette façon, on est certain que les articles ou produits amorçant un empilement combleront tous les volumes délimités par le revers des pistes 2.

Comme on peut le voir dans les Fig. 3 et 4, la largeur du toboggan est telle qu'il embrasse un volume largement comparable à celui du réservoir de stockage 10 dans lequel il est placé. La dite enceinte doit toujours être de dimension légèrement supérieure à la spirale afin de ménager à l'extérieur de cette dernière un espace suffisant pour permettre le débordement du produit. Son diamètre peut en effet correspondre à 90 voire 95% de la largeur du réservoir 10. Cette disposition est particulièrement avantageuse pour le stockage et le transport de produits 5 et d'articles fragiles. En effet, les pistes 2 jouent dans ce cas le rôle de baffles, reprenant la majeure partie du poids des articles qui y sont empilés. A l'intérieur du cylindre déterminé par le toboggan, la "pression" maximale exercée sur un article atteindra donc une valeur maximale correspondant à une hauteur d'un "pas" de l' hélicoïde. Dans le cas d'articles 5 particulièrement fragiles, on s'arrange pour que α ait une valeur légèrement inférieure à celle de l'angle de repos δ pour alléger les contraintes mécaniques pouvant résulter de l'élasticité de l' hélicoïde.

La dispersion des caractéristiques des produits ou articles à transporter est évidemment telle qu'il semble pratiquement impossible de réaliser un toboggan réellement universel. Le toboggan de l'invention permet pourtant de se rapprocher autant que possible de cet idéal. En effet, au contraire de ce qui existe dans l'art antérieur, la piste 2 est, comparativement au diamètre du toboggan, extrêmement large, ce qui lui permet déjà de s'accommoder intrinsèquement d'une très grande dispersion de caractéristiques (voir la Fig. 2). Par ailleurs, cette piste montre en section transversale un profil pratiquement droit. Quelles que soient leurs caractéristiques d'écoulement, les produits 5 ne sont donc pas "contraints" mécaniquement à adapter un trajet particulier, comme ce serait le cas si la section montrait un profil creux, mais peuvent poursuivre leur trajectoire spiralée indépendamment les uns des autres. Par ailleurs, dans un mode de réalisation avantageux, on a réalisé un soutènement des pistes permettant de modifier les angles α et β des pistes 2, avec pour conséquence que l' hélicoïde peut être ajustée pour correspondre aux caractéristiques optimales pour l'un ou l'autre produit 5 ou type de produit 5.

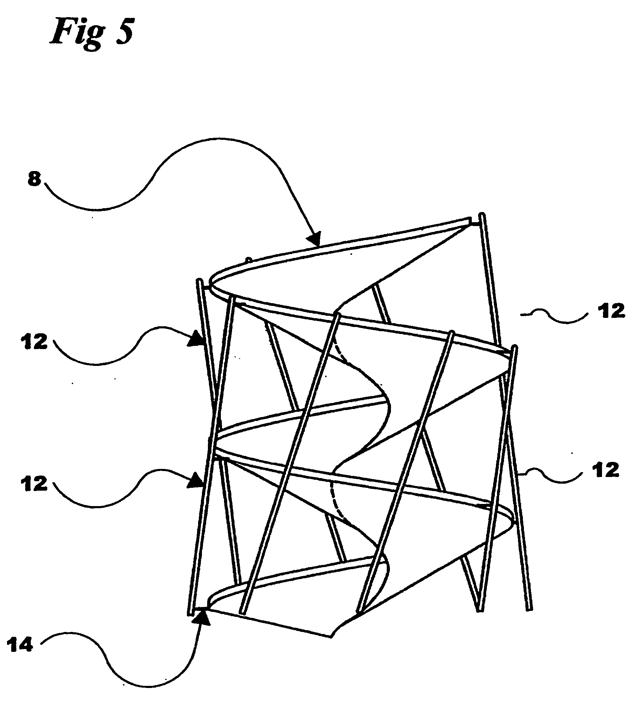

Comme on peut le voir sur les figures 3 et 4, la piste hélicoïde 2 est soutenue à intervalles angulaires réguliers par une série de tringles 12 disposées verticalement. Grâce à une liaison déformable 14 entre ces tringles 12 et le bord de la piste 2, il est possible d'incliner toutes les tringles 12 dans le même sens par rapport à leur position initiale, en provoquant ainsi soit un resserrement soit un étalement de la spirale (voir les Fig. 5 et 7, 8, 9), les pistes 2 étant réalisées dans un matériau doté d'une certaine capacité de déformation (tels que les matériaux plastiques, tôles d'acier inoxydable, etc.).

On peut citer comme liaison déformables des liaisons à rotule (voir Fig. 11) à bloc élastomère 15, des lamelles ou des cylindres de torsion.

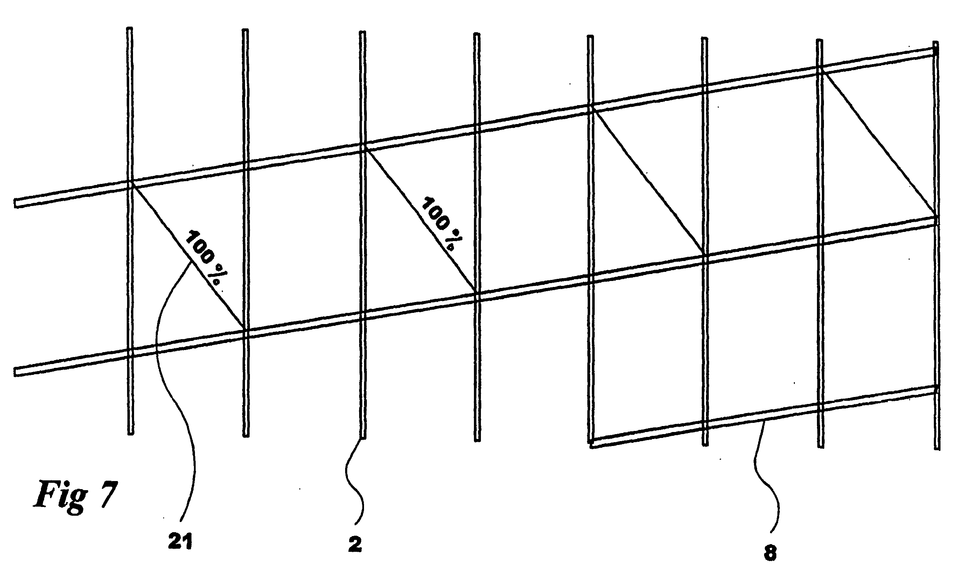

Lorsque l'angle d'inclinaison adéquat est obtenu, des entretoises 21 immobilisent la piste 2 et ses tringles 12 de soutènement dans leurs positions respectives (voir Fig. 7,8, 9). Le resserrement de l' hélicoïde provoque une augmentation de l'angle α , son étalement ayant l'effet inverse. Le tableau suivant est donné à titre d'exemple.

| État hélicoïde | Diamètre | Angle α | Longueur entretoise 21 |
|---|---|---|---|
| resserré | 75 cm | 41.7° | 83% |
| normal | 80 cm | 37.4° | 100% |
| étalé | 85 cm | 32° | 116% |

Suivant un autre mode de réalisation, on peut se contenter de faire varier uniquement le pas (c'est à dire la distance entre les deux spires consécutives) en prévoyant des tringles formées d'éléments de longueur variable (tringles 12 télescopiques ou interchangeables).

Les Fig. 12 et 13 montrent un autre mode de réalisation du dispositif de chargement de l'enceinte, lequel permet d'encore mieux adapter l'usage du toboggan de l'invention à des produits variés.

Le dispositif représenté ici ne possède pas de tronçon vertical, mais une rampe inclinée 22 d'un angle θ qui permet de conférer au flux de produit transporté la vitesse initiale nécessaire pour assurer sa descente le long du toboggan. L'angle θ est déterminé en fonction des caractéristiques d'écoulement des articles 5.

Afin d'initier la descente des produits au mieux sur la largeur de la piste 2, l'extrémité inférieure de la rampe 22 est agencée de façon à être orientable. En l'occurrence, comme montré à la Fig. 13, elle vient s'insérer sur une embouchure 23 pivotant dans un plan horizontal grâce à une monture discoïdale.

L'embouchure peut donc être orientée de façon à déverser certains produits plus "lents" à la périphérie de la piste 2, et des produits à écoulement plus rapide plus près du puits central 4.

On notera que la présence d'un puits central 4 facilite considérablement le nettoyage d'un réservoir 10 équipé du toboggan de l'invention, des éléments d'aspersion (têtes munies de gicleurs) pouvant y être facilement introduits par une ouverture appropriée 24.

Le toboggan de l'invention est avantageux non seulement au moment du transfert d'articles dans un conteneur, mais également comme élément permanent dans un conteneur, car il permet le stockage d'articles fragiles 5 en grands volumes sans y provoquer de casse : du fait de la descente à vitesse contrôlée, du fait du rôle de support intermédiaire (baffle) joué par les pistes, du fait de la prévention de points d'accumulation durant le déversage par le bas du conteneur.

Comme il a été dit plus haut, suivant le type de produit transporté, la présence d'un rebord 8 n'est nullement indispensable.

La hauteur de ce rebord 8 peut être très faible (5 à 10%) au regard de la largeur de la piste 2.

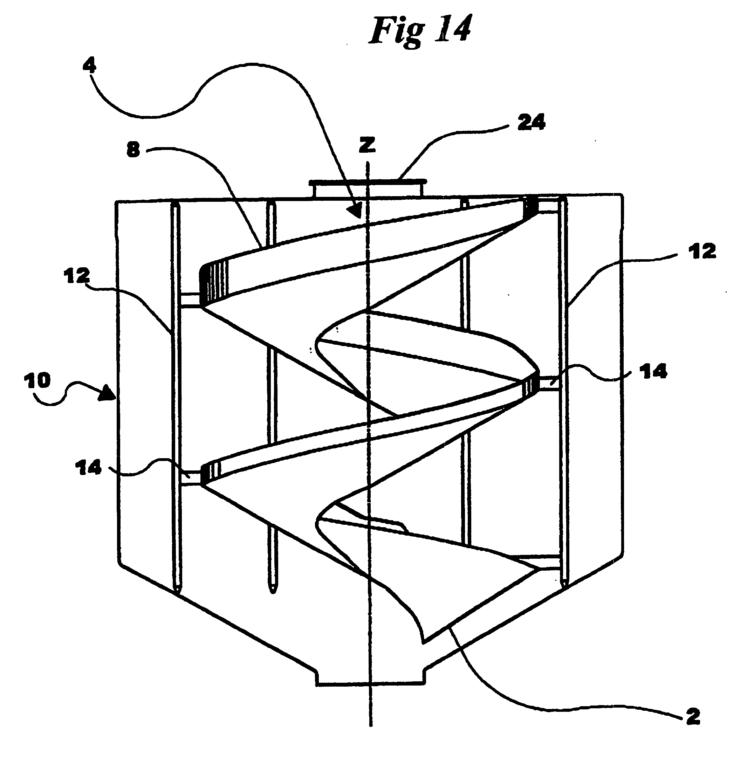

Lorsqu'il est placé dans un conteneur de stockage 10, le rôle essentiel du toboggan est d'obtenir une répartition optimale du produit 5 dans ce conteneur de stockage 10. En conséquence, l'intérêt de la présence d'un tel rebord 8 décroît avec la hauteur du toboggan. Comme montré à la Fig. 14, on peut donc réduire progressivement la hauteur de ce rebord 8 en proportion de la hauteur décroissante du toboggan.

Cette disposition peut être complétée par l'adjonction d'échancrures 26 favorisant la répartition du produit lorsque le remplissage touche à sa fin ou en cas d'empilement excessif.

Pour éviter que la présence des ces échancrures 26 ne permettent aux produits 5 animés d'une plus grande vélocité d'être éjectés trop tôt sous l'effet de la force centrifuge, il est intéressant dans ce cas de prévoir le long du rebord 8 des déflecteurs 28 en amont de ces échancrures 26.

## Revendications

1. Un toboggan répartiteur hélicoïdal pour enceinte de transfert de produits pharmaceutiques ou chimiques fragiles variés en vrac, ce toboggan comprenant au moins une piste (2) hélicoïdale se développant autour d'un axe (Z) vertical **caractérisé en ce que**
- le volume central du toboggan est évidé en forme de puits (4)
- chaque piste (2) est continue et présente un pas en substance constant
- chaque piste (2) forme un plateau large dont la section transversale est en substance droite, incliné transversalement en direction de l'axe (Z), l'angle d'inclinaison (α) de la piste (2) étant tel que les produits transférés, animés à la partie supérieure de chaque hélicoïde d'une vitesse suffisante pour que la force centrifuge les maintienne le long de la piste (2) correspondante, dévient vers l'axe (Z) lorsque la force centrifuge qui les maintient sur la piste (2) s'annule ou descend au-dessous d'une valeur critique,

2. Un toboggan hélicoïdal de transfert suivant la revendication 1 **caractérisé en ce que** l'inclinaison transversale (a) de chaque hélicoïde est supérieure ou égale à l'angle de repos du produit transporté.

3. Un toboggan hélicoïdal de transfert suivant l'une quelconque des revendications précédentes **caractérisé en ce que** l'inclinaison du revers de chaque piste en hélicoïde est légèrement inférieure ou égale à l'angle de repos (δ) du produit transporté.

4. Un toboggan hélicoïdal de transfert suivant l'une quelconque des revendications précédentes **caractérisé en ce qu'**il est muni d'un mécanisme permettant de faire varier l'inclinaison transversale (α) de la piste (2) en hélicoïde.

5. Un toboggan hélicoïdal de transfert suivant la revendication 4 **caractérisé en ce que** ce mécanisme comprend des tringles (12) soutenant les pistes (2) en hélicoïde via des liaisons articulées (14) .

6. Un toboggan hélicoïdal de transfert suivant la revendication 5 **caractérisé en ce que** ce mécanisme comprend des tringles (12) dont la longueur est ajustable.

7. Un toboggan hélicoïdal de transfert suivant l'une quelconque des revendications précédentes **caractérisé en ce que** chacune des pistes en hélicoïde est munie d'un rebord extérieur (8).

8. Un toboggan hélicoïdal de transfert suivant la revendication 7 **caractérisé en ce que** le rebord extérieur (8) est percé d'échancrures (26), un déflecteur (28) étant placé en amont de chaque échancrure (26).

9. Une enceinte de stockage (10) à vidange par le bas **caractérisée en ce qu'**elle est munie d'un toboggan hélicoïdal suivant l'une quelconque des revendications précédentes.

10. Une enceinte de stockage (10) suivant la revendication 9 **caractérisée en ce qu'**elle comprend au moins un dispositif de chargement (6) qui injecte le produit transporté quasi-tangentiellement à chaque piste (2) à la partie supérieure de chaque hélicoïde avec une vitesse suffisante pour que la force centrifuge maintienne le produit le long de la piste (2) correspondante.

11. Une enceinte de stockage (10) suivant la revendication 10 **caractérisée en ce que** chaque dispositif de chargement (6) comprend un dispositif de distribution permettant d'injecter le produit, en fonction de sa dynamique, en un endroit plus ou moins éloigné de l'axe Z

## Patentansprüche

1. Schraubenförmige Verteilerrutsche für Behälter zur Übergabe von verschiedenen zerbrechlichen pharmazeutischen oder chemischen Schüttgutprodukten, wobei diese Rutsche mindestens eine schraubenförmige Bahn (2) umfasst, die sich um eine vertikale Achse (Z) herum erstreckt,
**dadurch gekennzeichnet, dass**
- das mittlere Volumen der Rutsche in Form eines Brunnens (4) ausgehöhlt ist,
- jede Bahn (2) durchgehend ist und eine im Wesentlichen konstante Steigung aufweist,
- jede Bahn eine breite Plattform bildet, deren Querschnitt im Wesentlichen gerade ist, die quer zur Richtung der Achse (Z) geneigt ist, wobei der Neigungswinkel (α) der Bahn (2) so ist, dass die übergebenen Produkte, die am oberen Teil jedes Helikoids mit einer ausreichenden Geschwindigkeit in Bewegung versetzt werden, so dass die Zentrifugalkraft sie entlang der entsprechenden Piste (2) hält, zur Achse (Z) abweichen, wenn die sie auf der Bahn (2) haltende Zentrifugalkraft außer Kraft gesetzt wird oder unter einen kritischen Wert abfällt.

2. Schraubenförmige Übergaberutsche nach Anspruch 1, **dadurch gekennzeichnet, dass** die Querneigung (α) jedes Helikoids größer gleich dem Ruhewinkel des transportierten Produkts ist.

3. Schraubenförmige Übergaberutsche nach einem der vorhergehenden Ansprüche, **dadurch gekennzeichnet, dass** die Neigung der Rückseite jeder schraubenförmigen Bahn etwas kleiner oder gleich dem Ruhewinkel (δ) des transportierten Produkts ist.

4. Schraubenförmige Übergaberutsche nach einem der vorhergehenden Ansprüche, **dadurch gekennzeichnet, dass** sie mit einem Mechanismus versehen ist, der eine Änderung der Querneigung (α) der schraubenförmigen Bahn (2) gestattet.

5. Schraubenförmige Übergaberutsche nach Anspruch 4, **dadurch gekennzeichnet, dass** dieser Mechanismus Stangen (12) umfasst, die die schraubenförmige Bahn (2) über Gelenkverbindungen (14) stützen.

6. Schraubenförmige Übergaberutsche nach Anspruch 5, **dadurch gekennzeichnet, dass** dieser Mechanismus Stangen (12) umfasst, deren Länge verstellbar ist.

7. Schraubenförmige Übergaberutsche nach einem der vorhergehenden Ansprüche, **dadurch gekennzeichnet, dass** jede der schraubenförmigen Bahnen mit einem Außenrand (8) versehen ist.

8. Schraubenförmige Übergaberutsche nach Anspruch 7, **dadurch gekennzeichnet, dass** der Außenrand (8) mit Aussparungen (26) versehen ist, wobei stromaufwärts jeder Aussparung (26) eine Ablenkfläche (28) angeordnet ist.

9. Von unten entleerbarer Lagerungsbehälter (10), **dadurch gekennzeichnet, dass** er mit einer schraubenförmigen Rutsche nach einem der vorhergehenden Ansprüche versehen ist.

10. Lagerungsbehälter (10) nach Anspruch 9, **dadurch gekennzeichnet, dass** er mindestens eine Ladevorrichtung (6) aufweist, die das transportierte Produkt am oberen Teil jedes Helikoid mit ausreichender Geschwindigkeit, damit die Zentrifugalkraft das Produkt entlang der entsprechenden Bahn (2) hält, fast tangential zu jeder Piste (2) einspeist.

11. Lagerungsbehälter (10) nach Anspruch 10, **dadurch gekennzeichnet, dass** jede Ladevorrichtung (6) eine Verteilvorrichtung aufweist, die ein Einspeisen des Produkts in Abhängigkeit von seiner Dynamik an einer mehr oder weniger von der Achse Z entfernten Stelle gestattet.

## Claims

1. A helical distributing chute conveyor for a receptacle for transferring loose varied fragile pharmaceutical or chemical products, this chute conveyor comprising at least one helical chute path (2) developing about a vertical axis (Z), **characterized in that**
- the central volume of the chute conveyor is hollowed out in the form of a well (4)
- each chute path (2) is continuous and has substantially constant pitch
- each chute path (2) forms a broad plateau the cross section of which is substantially straight, inclined transversely towards the axis (Z), the angle of inclination (α) of the chute path (2) being such that the transferred products, given at the upper part of each helicoid sufficient speed for centrifugal force to keep them along the corresponding chute path (2), deviate towards the axis (Z) when the centrifugal force which holds them on the chute path (2) cancels out or drops below a critical value.

2. A helical transfer chute conveyor according to Claim 1, **characterized in that** the transverse inclination (α) of each helicoid is greater than or equal to the repose angle of the transported product.

3. A helical transfer chute conveyor according to either one of the preceding claims, **characterized in that** the back slope of each helicoid chute path is slightly less than or equal to the repose angle (δ) of the transported product.

4. A helical transfer chute conveyor according to any one of the preceding claims, **characterized in that** it is equipped with a mechanism allowing the transverse inclination (α) of the helicoid chute path (2) to be varied.

5. A helical transfer chute conveyor according to Claim 4, **characterized in that** this mechanism comprises linkages (12) supporting the helicoid chute paths (2) via articulated links (14).

6. A helical transfer chute conveyor according to Claim 5, **characterized in that** this mechanism comprises linkages (12) of adjustable length.

7. A helical transfer chute conveyor according to any one of the preceding claims, **characterized in that** each of the helical chute paths is equipped with an outer rim (8).

8. A helical transfer chute conveyor according to Claim 7, **characterized in that** the outer rim (8) is pierced with cut-outs (26), a deflector (28) being placed upstream of each cut-out (26).

9. A bottom-emptied storage receptacle (10) **characterized in that** it is equipped with a helical chute conveyor according to any one of the preceding claims.

10. A storage receptacle (10) according to Claim 9, **characterized in that** it comprises at least one loading device (6) which injects the transported product almost tangentially to each chute path (2) at the upper part of each helicoid at sufficient speed that centrifugal force keeps the product along the corresponding chute path (2).

11. A storage receptacle (10) according to Claim 10, **characterized in that** each loading device (6) comprises a distributing device allowing the product to be injected, depending on its dynamics, at a point closer to or further away from the axis Z.
